Europäisches Patentamt

**European Patent Office**

**Office européen des brevets**

(19)

(11) Publication number: **0 107 433**
A2

# (12) EUROPEAN PATENT APPLICATION

(21) Application number: **83306137.7**

(22) Date of filing: **11.10.83**

(51) Int. Cl.³: **H 01 B 13/22, H 01 B 7/28**

(30) Priority: **21.10.82 CA 413945**

(43) Date of publication of application: **02.05.84**
**Bulletin 84/18**

(84) Designated Contracting States: **DE FR GB**

(71) Applicant: **NORTHERN TELECOM LIMITED,**
**1600 Dorchester Boulevard West, Montreal Quebec**
**H3H 1R1 (CA)**

(72) Inventor: **McKay, Glen, 139 Quill Bay, Saskatoon**
**Saskatchewan S7K 4V1 (CA)**

(74) Representative: **Crawford, Andrew Birkby et al, A.A.**
**THORNTON & CO. Northumberland House 303-306 High**
**Holborn, London WC1V 7LE (GB)**

(54) **Manufacture of telecommunication cable.**

㊗ Telecommunications cable and method for its manufacture, the cable having two covering layers (28, 30) surrounding a core, each layer being a sheating or jacketing layer, and in which a water blocking layer (34) lies between the tow covering layers. The water blocking layer comprises a wrapping (36) of flexible and compressible powder pegnable material which is impregnated throughout its thickness with a powder (38) which contacts the outer surface of the inner layer and the inner surface of the outer layer. The powder is non-swellable and forms a viscous water blocking solution when in contact with water.

EP 0 107 433 A2

1

This invention relates to the manufacture of a telecommunications cable.

A telecommunications cable may comprise a plurality of individually insulated electrical conductors which are stranded together in a core. Alternatively, in an optical telecommunications cable, a core may be provided which includes one or more waveguides or optical fibers. In the manufacture of a telecommunications cable having either construction of core, it is normal practice to enclose the core in jacketing and sheathing layers to protect it from environmental effects and from damage such as may be caused by animals gnawing into the cable or by rocks cutting into the cable when the cable is located underground.

Dependent upon the manner of manufacture of the cable, succeeding layers of sheathing and jacketing materials may or may not be bonded together. In cases where bonding takes place between layers, such as, for instance, between a jacketing layer and a metal sheathing layer which is coated with a plastic coating material which bonds to the jacket, then water seepage between the layers is prevented. However, if the cable is cut into at least as far as the interfacial region between layers which are not bonded together, then water may seep into the cut area and pass between the layers and along the length of the cable. Where this occurs and the cable is buried underground in a region which is subject to freezing temperatures, there may be a problem. If moisture freezes between the unbonded layers, resulting expansion of the ice will cause separation of the layers and may further result in splitting of sheath or jacket material lying outwardly of the ice.

2

It is conventional practice to flood the interfacial regions between unbonded layers in an attempt to prevent water seepage between them. For the same purpose it has also been suggested to introduce petroleum jelly between unbonded layers, e.g. beneath a steel sheath which covers an inner jacketing layer. The problem with existing flooding techniques and also with the suggested use of petroleum jelly is that there may be an absence of the flooding material or jelly in certain areas between the layers and water seepage may result.

The present invention is concerned with a method of making a cable and also relates to a cable structure in which a powder is disposed between sheathing or jacketing layers of the cable, this powder when in contact with water being non-swellable and also forming upon contact with water, a viscous, water blocking solution. It is a feature of the invention that the powder is located between the layers by being impregnated into a powder impregnable material which is wrapped around an inner of the layers, the powder being impregnated into the material either before or after the wrapping takes place and before the outer layer is added.

Accordingly, the present invention provides a method of making a telecommunications cable having at least two covering layers surrounding a core in which the layers comprise an inner layer and an outer layer with each layer being a sheathing or jacketing layer wherein, after location of the inner layer around the core, the method comprises providing a water blocking layer completely around the inner layer, the water blocking layer comprising a wrapping of a flexible and compressible powder pregnable material which is impregnated throughout its thickness with a powder which contacts the outer surface of the inner layer, is

3

non-swellable, and forms a viscous water blocking solution when in contact with water, and enclosing the water blocking layer in the outer layer with the powder contacting the inner surface of the outer layer.

The material is preferably impregnated with powder after the material is wrapped around the inner layer. This avoids any losses of powder such as may be caused during wrapping of the already impregnated material. In this preferred method, the powder may be impregnated into the wrapping material by passing the part of the cable wrapped with the material through a fluidized bed of the material or, alternatively, through a vibrating bed of the material. With the wrapping material passing beneath the upper fluidized surface of the bed, i.e. by being immersed within the fluidized powder, the fluidized particles pass through interstices of the material in a manner similar to the passage of a fluid, and fill the interstices so as to impregnate the material. The material may also be at least partially impregnated before being formed into the wrapping and this may be done by pouring the powder onto the material with the material in a flat unwrapped condition. However, to ensure that there is no loss of powder the wrapped cable part should again be passed through a fluidized bed or vibrating bed as discussed above. Also, to assist in obtaining complete powder filling between the inner and outer layers, it is preferable to apply powder to the outside surface of the inner layer before the wrapping of the powder pregnable material is formed.

One powder which is known to operate successfully to prevent flow of water between mutually unbonded covering layers of a cable is a powder formed from a mixture of a hydrophilic and hydrophobic powders.

One particular hydrophilic powder is a high molecular weight resin which may be an anionic polyacrylamide resin. This may have an average molecular weight between $2.5 \times 10^6$ and $7 \times 10^6$ and with

4

between 12% and 28% acrylamide groupings which have been converted to acylic acid groupings. The acrylic acid groupings prevent destabilization of the viscous solution when the water is not pure as under such circumstances the polyacrylamide would itself be unstable. Suitable materials are sold under the trade mark "Separan" by Dow Chemical Corporation or under the trade mark "Magnifloc" by Cyanimid Company. Alternatively to the acrylic acid groupings, the polyacrylamide resin may be crosslinked by irradiation to increase its molecular weight.

As further alternatives, the resin is an irradiated crosslinked polyethylene oxide or the resin is a hydrolized starch graft polymer of polyacrylonitrile.

The hydrophobic powder is preferably calcium carbonate surface treated with a hydrophobic material. The calcium carbonate itself is inert but when surface treated, the powder acts in hydrophobic fashion. The surface treatment is preferably by way of a coating of a water repellent long chain fatty acid or modified fatty acid selected from the group consisting of lauric acid, myristic acid, palmitic acid, stearic acid and arachidic acid. Alternatively, the hydrophobic powder is inherently hydrophobic and is not surface coated.

The powder is soluble in water to cause a viscosity build-up and this increased viscosity produces a water blocking medium. It is possible that some water penetration may take place but this is in the form of microbore channels through the viscous solution and if the temperature of the water drops below freezing, then a solid ice block does not form in the channels and no expansion of the ice can take place when the viscous solution becomes frozen. It is believed that the microbore channels break up any ice crystals as they tend to form thereby preventing

0107433

5

the formation of a solid ice block. Whatever is the true explanation may not be known, but the effect is, remarkably, that the solid ice block does not form and no pressurization between the sheathing or jacketing layers takes place such as to separate them or to cause a splitting action of a layer or layers to take place.

The hydrophilic powder is instrumental in forming the viscous solution in contact with water. After formation of the viscous solution, the hydrophobic powder is instrumental in blocking further penetration of water along the cable. Suitable proportions of the materials to provide a viscous solution to prevent ice block formation and to restrict penetration of the water into the cable, lie between 5% and 30% of hydrophilic powder and between 95% and 70% of the hydrophobic powder. The presence of small voids in the powder does not detract from the water blocking capability because water blocking effectively occurs by the formation of the viscous solution which then proceeds to fill such small voids.

The invention also includes a telecommunications cable having a core surrounded by at least two covering layers comprising an inner layer and an outer layer with each layer being a sheathing or jacketing layer, wherein between the two layers there is disposed a water blocking layer comprising a wrapping of a powder pregnable material which is impregnated throughout its thickness with a powder which extends through interstices of the material to contact surfaces of the sheathing or jacketing layers which confront the water blocking layer, the powder when in contact with water being non-swellable and forming a viscous water blocking solution.

6

The invention further includes apparatus for use in the manufacture of a telecommunications cable comprising, in sequence along a feedpath for a cable core having an inner sheathing or jacketing layer around the core, means for applying a water blocking layer around the inner layer and means for enclosing the water blocking layer with an outer sheathing or jacketing layer.

One embodiment of the invention will now be described, by way of example, with reference to the accompanying drawings in which:-

Figure 1 is a cross-sectional view of an optical telecommunications cable;

Figure 2 is a cross-sectional view on a larger scale than Figure 1, taken along the axis of the cable showing a powder impregnated wrapping around a jacketing layer;

Figure 3 is a view similar to Figure 2 showing the construction after the addition of a sheathing layer; and

Figure 4 is a diagrammatic side view of apparatus for performing the method of the invention.

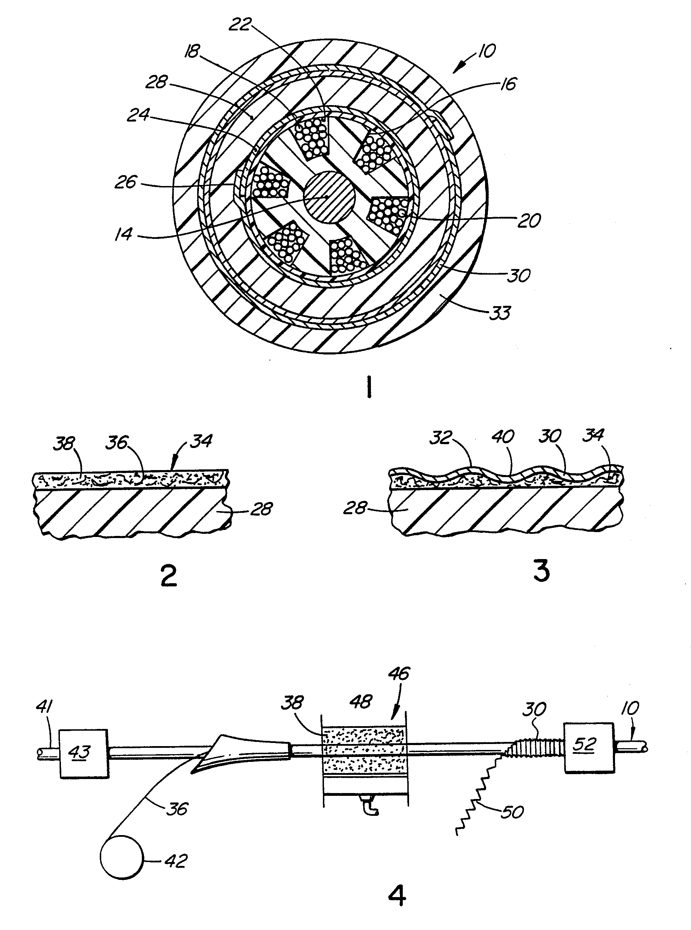

In the embodiment, as shown by Figure 1, an optical cable 10 comprises a crush resistant core 12 surrounding a steel strength member 14, the core 12 having been formed from extruded plastics material such as high density polyethylene. The core is extruded with a plurality, e.g. six as shown, circumferentially spaced ribs 16 which extend longitudinally of the core. The ribs may extend strictly in an axial direction but in the preferred arrangement as in this embodiment, the ribs lie at an angle to the core axis. This angle may be produced by the ribs extending either helically or sinusoidally along the core.

7

The ribs have circumferentially wide outer ends and define tapering grooves 18 between them. Each of the grooves carries a plurality of optical waveguides 20 which are sufficiently loosely contained therein to avoid any external pressure upon them created by heat expansion or shrinkage of the cable, such as may increase the attenuation of the waveguides.

Surrounding the core and waveguides is a binder tape (not shown) which has been wound around the core to hold the waveguides in the grooves until a corewrap 22 has been located in place. Additionally to the waveguides, the grooves each include a mixture of hydrophilic and hydrophobic powders. This mixture of powders is provided to prevent water which may penetrate into the grooves from freezing and crushing the waveguides. The powder is retained in place after being added to the grooves by passage of the core through a fluidized bed and then, by the immediate covering of the core with the corewrap 22. An optical cable structure and method of manufacture involving the addition of the powder to the grooves and the immediate use of the corewrap is described in copending U.S. Patent application serial number 275,303 filed June 19, 1981 in the name of T. S. Hope and entitled "Powder Filled Fiber Optic Cable".

The corewrap 22 has a lint type exterior surface, i.e. one which has a fluffy or matt finish. This surface is capable of absorbing and holding a surrounding layer of powder around the corewrap. In this embodiment, the lint type exterior surface is formed by an outer layer of the corewrap, this outer layer being a material sold under the trade mark "Reemay" which is made from spun bonded polyester. The corewrap also has an intermediate layer of polypropylene powder impermeable sheet material

8

and an inner layer of polyester sheet material as sold under the trade mark "Mylar".

Surrounding the corewrap 22 is a covering layer for the core comprising an aluminum sheath layer 24 having circumferentially extending corrugations (not shown) the aluminum being wrapped around the corewrap and overlapped at its longitudinally extending edges 26 in a conventional manner for forming sheaths in the manufacture of telecommunications cable. The sheath 24 has a thickness of approximately 0.008 inches (0.203 millimeters) and is coated on both surfaces with medium density polyethylene of approximately 0.002 inches (0.05 millimeters) thickness. Surrounding the sheath layer 24 is a first jacket layer 28 formed from extruded polyethylene. The polyethylene of the layer 28 is compatible with the coating material on the aluminum so as to fuse with or bond with the coating material under the action of heat of extrusion. The layer 28 is extruded by accepted extrusion techniques and the heat of extrusion is sufficient to cause softening of the outer coating on the metal so as to blend and bond with it. In addition, at the overlapped metal ends 26, opposing coats on the aluminum which are in contact are caused to flow together by virtue of the heat of extrusion, thereby providing a moisture proof barrier between the ends.

Disposed outwardly of the jacket layer 28 is a second sheath layer 30 formed from steel of approximately 0.006 inches (0.152 millimeters) in thickness, the steel being coated with minimum density polyethylene on both surfaces. The layer 30 is provided with circumferentially extending corrugations 32, for instance as shown by Figure 3.

9

Disposed outwardly of the layer 30 is a second jacket layer of polyethylene 33 which is extruded around the layer 30 and is bonded to the polyethylene coating on the layer 30 by the heat of extrusion in a manner similar to the bonding of layers 24 and 28.

According to an essential requirement of the invention, a water blocking layer 34 is located between the layers 28 and 30. Without the presence of the water blocking layer, it would be impossible for the layer 30 to be bonded to the layer 28 even though other layers can be bonded together by the heat of extrusion. The heat of extrusion of the layer 33 would not enable sufficient heat transfer through the steel layer 30 to cause sufficient rise in temperature to fuse the layers 28 and 30 together. No bonding would thus take place between the layers 28 and 30. Without the water blocking layer, there would hence be the possibility of migration of water along the cable between layers 28 and 30 in the event that the layers 30 and 33 are cut into after or during installation. To prevent the migration of water between mutually unbonded layers, such as the layers 28 and 30, the present invention provides a water blocking layer, as exemplified in this embodiment by the layer 34, and this water blocking layer comprises a powder pregnable material 36 (Figures 2 and 3) which is impregnated with a powder 38 which when in contact with water is non-swellable and forms a viscous water blocking solution. It is essential that the powder contacts the opposing surfaces of the layers 28 and 30 and also is sufficient in quantity to provide its water blocking function.

For providing the water blocking function, it has been found that it is a practical impossibility to provide sufficient thickness, density and uniformity of the powder between the unbonded layers merely by

10

coating the outer surface of the layer 28 before location of the sheath 30 in position. In the construction of the present invention, the powder pregnable material 36 acts as a carrier for the powder to enable the required powder thickness, density and uniformity to be obtained. The material 36 needs to be powder impregnable from one surface to the other. Also it is essential that the powder impregnates the material 36 right through the material thickness with the powder lying in contact with the confronting surfaces of the layers 28 and 30. A suitable material 36 is of lint type construction, i.e. one which is fluffy or wool-like and is capable of absorbing and holding within interstices of the material a large amount of powder with which it is impregnated. A suitable material is a spun bonded polyester sold under the trade mark "Reemay". The material 36 is formed entirely from the spun bonded polyester construction and significantly differs from the material of the corewrap 22 in that the material 36 has no impermeable sheet layers adhered to it as is the case with the corewrap.

Hence, the powder surrounding the layer 28 is retained in sufficient quantities around the layer until the sheath layer 30 is placed in position. The powder is formed as a mixture of hydrophilic and hydrophobic powders. The hydrophilic powder is a high molecular weight resin which is an anionic polyacrylamide resin, e.g. as sold under the trade mark "Separan" by Dow Chemical Corporation. The hydrophobic powder is in admixture with a hydrophobic powder which is calcium carbonate powder, the particles of which are surface coated with stearic acid to provide the hydrophobic properties of the powder. In the event that water passes through a cut formed through outer jacket and sheath layers 30 and 33, it will contact the powder. This contact with water will cause the hydrophilic powder to form a viscous solution in the localized region of the cut. Upon formation of the viscous solution, the hydrophobic powder is then instrumental, in conjunction with the viscous solution, in blocking further penetration by the water along the cable. Thus the water lying between the layers 28 and 30 is localized at or around its point of entry. It is determined that suitable proportions of the hydrophilic and hydrophobic materials to provide a viscous solution to prevent ice block formation and to restrict water penetration along the cable may lie between 5% and 30% of the hydrophilic material and correspondingly between 95% and 70% of the hydrophobic material. The percentages chosen are dependent upon suitability for particular requirements of cable design. This may be determined experimentally. In this particular embodiment there is approximately 20% polyacrylamide powder and 80% calcium carbonate powder by weight in the mixture. In addition, it may be found that the quantity of powder used per unit length of the cable may have a bearing upon the efficiency of a water blocking seal. In the particular embodiment, the diameter of the outer surface of the layer 28 is around 1.6 centimeters, while the quantity of powder used is in the region of 3.0 grams per foot length of cable.

An important consideration for the material 36 is not only its powder permeable nature but also its compressibility and deformability. It is desirable for the material 36 to be of a compressible and deformable nature so that it may form itself intimately together with the powder into the shapes defined between the confronting surfaces of the two layers against which it is to seal. While the invention is applicable to sealing between two sheathing or jacketing layers which may be of non-corrugated form, there is no doubt that the

12

material 36 should be able to be deformed under compression to follow a corrugated surface shape. For instance, in the present embodiment as shown by Figure 2, when the water blocking layer 34 is initially laid around the layer 28 it is of substantially constant thickness as shown. Upon the application of the layer 30 however, around the layer 34, the corrugations form narrow and wide space regions between the layers 28 and 30. Surprisingly, it is found that the compression of the material 36 by valley parts 40 of the corrugations results in sideways displacement of the material together with powder so that the wider space regions between the corrugation peaks and the layer 28 are substantially completely filled with powder. Hence, a substantial uniform powder filling of the constantly changing thickness space under the corrugations is achieved.

A cable constructed according to the embodiment was tested for water penetration between the layers 28 and 30. The test cable of test length of 50 meters was set up in standard equipment for making water penetration tests and the water was allowed to communicate with the interfacial region between the layers 28 and 30 by removal of a short axial length of layers 30 and 33. It was found upon cutting open the cable that after 48 hours of water contact with this region under a water pressure created by a 1 meter head of water above the cable, that the water had only penetrated along the cable for a distance of around 400 millimeters. Along this distance, the hydrophilic powder had formed into a viscous solution. The fact that water had penetrated no further illustrates the fact that the viscous solution together with the hydrophobic powder particles in the solution had formed a water block upon contact with the water.

13

In contrast to this, a similar test was performed upon test cable of length 50 meters in which powder was merely spread around the layer 28 before adding layer 30 and without use of the material 36. In this test, water leakage occurred from the end of the cable after one minute of being subject to water contact in the region between the two layers 28 and 30.

Further advantages with the use of the powder in the layer 34 include the fact that the powder is non-swellable and therefore, contact by the water will not cause the layers to separate should freezing temperatures be encountered. Further to this, the water is prevented by the powder from forming a solid ice block with its accompanying ice expansion problems. It is believed that the reason for this is that the water may flow solely along the microbore channels in the viscous-solution and this prevents any solid ice buildup.

The water blocking layer 34 was provided between the layers 28 and 30 in the following manner.

After the provision of the extruded polyethylene layer 28, the cable part 41 at this stage of manufacture was dusted on the outside surface of the layer 28 with powder of the same mixture as in layer 34. This is preferably done, as shown in apparatus of Figure 4, by passing the cable through a fluidized bed 43 in which the cable is passed beneath an upper surface of the bed. The material 36 was then fed from a spool 42 and wrapped around the layer 28 by using a wrapping guide 44 forming part of a means for applying a water blocking layer around the inner layer. The wrapping guide is of conventional construction for normal core wrap techniques. This method of wrapping will therefore, not be described in detail. After the location of the material 36 around the cable part 41,

14

the assembly was then passed through another part of the water blocking layer applying means, namely a fluidized bed 46 in which a bed of the powder was held in a fluidized state in a conventional fluidized manner by the application of air under pressure beneath the bed. As shown by Figure 4, the cable was fed beneath a defined upper surface 48 of the bed so as to be immersed within the powder itself. This is distinct from the passage of the cable part above the bed which would entail the use of means, such as electrostatic attraction, to lift particles from the bed towards the cable part surface. In the process of the embodiment, the use of electrostatic forces is avoided. It is found that the powder in the bath flows in a liquid type manner to fill the interstices defined in the material 36 and substantially fills the interstices. Density of powder fill in the material may be changed by changing the through-put speed of the cable part in the bed until the desired density is obtained. Alternatively, the density of powder fill may be changed by varying air pressure above the bed or by varying the air flow speed for fluidizing the bed.

Upon leaving the bed 46, the core is immediately wrapped in the second sheathing layer 30. The application of this layer is by conventional means by feeding a corrugated strip 50 of steel beneath the cable and wrapping the strip around the cable. The cable then proceeds to a second extruder 52 in which the outer jacket 32 is applied by known extrusion techniques.

- 15 -

CLAIMS:

1. A method of making a telecommunications cable having at least two covering layers surrounding a core in which the layers comprise an inner layer and an outer layer with each layer being a sheathing or jacketing layer wherein, after location of the inner layer around the core, the method is characterized in comprising:-

providing a water blocking layer completely around the inner layer, the water blocking layer comprising a wrapping of a flexible and compressible, powder pregnable material which is impregnated throughout its thickness with a powder which contacts the outer surface of the inner layer, is non-swellable, and forms a viscous water blocking solution when in contact with water; and

enclosing the water blocking layer in the outer layer with the powder contacting the inner surface of the outer layer.

2. A method according to claim 1 characterized in comprising impregnating the powder pregnable material with the powder after wrapping the material around the inner layer.

3. A method according to claim 2 characterized in comprising impregnating the material with the powder by passing the cable core having the wrapping of material through a fluidized bed of the powder with the core located beneath a defined upper surface of the bed, the powder flowing in fluid-type manner through the interstices of the material so as to impregnate it and without use of electrostatic attraction.

- 16 -

4. A method according to claim 3 characterized in comprising applying powder to the outer surface of the inner layer before wrapping the powder pregnable material around the inner layer.

5. A method according to either of claims 1 and 2 characterized in that one of the inner and outer layers is of corrugated form which forms narrow and wide space regions between the inner and outer layers, and during application of the outer layer, the powder impregnated material is compressed and deformed to distribute the powder substantially uniformly throughout the narrow and wide space regions.

6. A method according to either of claims 1 and 2 characterized in impregnating the powder pregnable material with the powder in the form of a mixture of hydrophilic and hydrophobic powders.

7. A telecommunications cable having a core surrounded by at least two covering layers comprising an inner layer and an outer layer with each layer being a sheathing or jacketing layer, characterized in that between the two layers (28, 30) there is disposed a water blocking layer (34) comprising a wrapping of a powder pregnable material (36) which is impregnated throughout its thickness with a powder (38) which extends through interstices of the material to contact surfaces of the inner and outer layers which confront the water blocking layer, the powder when in contact with water being non-swellable and forming a viscous water blocking solution.

8. A cable according to claim 7 characterized in that one of the inner and outer layers (30) is corrugated to form narrow and wide space regions between the two layers and the powder is distributed substantially uniformly through the narrow and wide space regions.

9. A cable according to claim 7 characterized in that the powder comprises a mixture of hydrophilic and hydrophobic powders.

10. A cable according to claim 9 characterized in that the hydrophilic powder is from 5% to 30% by weight of the total weight of the mixture and the hydrophobic powder is correspondingly from 95% to 70% by weight.

11. A cable according to claim 10 characterized in that the hydrophilic powder is a high molecular weight resin.

12. A cable according to claim 11 characterized in that the hydrophobic powder is calcium carbonate surface treated with a hydrophobic material.

13. Apparatus for use in the manufacture of a telecommunications cable characterized in that it comprises in sequence along a feedpath for a cable core having an inner sheathing or jacketing layer around the core:-

means for applying a water blocking layer around the inner layer; and

means for enclosing the water blocking layer with an outer sheathing or jacketing layer.

14.   Apparatus according to claim 13 characterized in that the means for applying the water blocking layer comprises means for wrapping a flexible and compressible, powder pregnable material around the inner layer and a means to impregnate the material with the powder.

15.   Apparatus according to claim 14 characterized in that the means to impregnate the material comprises a fluidizable bed of the material.

1

2

3

4